# EUROPÄISCHE PATENTSCHRIFT

(11) **EP 0 640 505 B1**
(45) Veröffentlichungstag und Bekanntmachung des Hinweises auf die Patenterteilung: **12.11.1997**
(21) Anmeldenummer: 94113028.8
(22) Anmeldetag: 20.08.1994
(51) Int. Cl.: B60J 7/00

(54) **Verkleidungsdeckel für Kraftfahrzeug-Schiebedächer**
Screen for vehicle-sunroof
Habillage de toit pour véhicules pourvus d'un toit coullisant

(30) Priorität: 26.08.1993 DE 4328674
(43) Veröffentlichungstag der Anmeldung: 01.03.1995
(73) Patentinhaber: Rockwell International GmbH, 60314 Frankfurt (DE)
(72) Erfinder: Hattas, Rainer, D-63594 Gründau (DE); Federmann, Dieter, D-63450 Hanau (DE)
(74) Vertreter: Oppermann, Ewald, Dipl.-Ing.

(56) Entgegenhaltungen:
- EP-A- 0 035 371
- GB-A- 532 146
- GB-A- 2 235 233

## Beschreibung

Die Erfindung bezieht sich auf einen Verkleidungsdeckel für Kraftfahrzeug-Schiebedächer, wie er im Oberbegriff des Anspruchs 1 angegeben ist. Unter dem hier verwendeten Sammelbegriff "Schiebedächer" sollen einfache Schiebedächer, Schiebehebedächer, Oberfirstschiebedächer und Lüftungsdächer verstanden werden, deren der Dachöffnung zugeordneter Deckel, hier als "Schiebedeckel" bezeichnet, als Blech- oder Glasdeckel ausgebildet sein kann.

Verkleidungsdeckel, für die auch die Bezeichnung "Schiebehimmel" gebräuchlich ist, können die Dachöffnung unterhalb des Schiebedeckels vollständig oder teilweise verschließen oder auch vollständig freigeben. Bei vollständiger Öffnungsverschiebung des Schiebedeckels schützen Verkleidungsdeckel vor direkter Sonneneinstrahlung und ermöglichen bei entsprechender luftdurchlässiger Ausführung dennoch eine praktisch zugfreie Entlüftung bzw. Belüftung des Fahrzeuginnenraums. Eine gute Entlüftung wird bei derartigen luftdurchlässigen Verkleidungsdeckeln auch erreicht, wenn der Schiebedeckel zu Lüftungszwecken nur mit seiner Hinterkante angehoben, der Verkleidungsdeckel aber in seiner die Dachöffnung ausfüllenden Schließlage ist.

Bei einem bekannten Verkleidungsdeckel (DE-B 11 18 032) ist dieser aus einem flachen, nicht eigensteifen Himmelrahmen und einer den eigentlichen Verkleidungsdeckel bildenden am Rahmen starr befestigten Füllung aufgebaut. Die mehrteilige plattenförmige Füllung verschafft dem Verkleidungsdeckel die notwendige Stabilität. Für Lüftungszwecke bei gleichzeitiger Lichtdurchlässigkeit kann die Füllung mindestens teilweise aus gelochtem Material, beispielsweise aus gelochtem Aluminiumblech bestehen. Dieser bekannte Verkleidungsdeckel ist daher, insbesondere wenn er noch mit einem nach Art eines Windabweisers ausschwenkbaren Plattenteil ausgerüstet ist, aufwendig ausgebildet und verhältnismäßig schwer.

Ein gattungsgemäßes Verkleidungsdeckel, bei welchem das als Gitter ausgebildete luftdurchlässige Flächenmaterial in einem in Schienen verschiebbaren Rahmen gehalten wird, ist ebenfalls schon bekannt (GB-A-2 235 233). Über die Ausbildung dieses Rahmens und die Art und Weise der Befestigung und Spannung des Flächenmaterials am Rahmen sind jedoch keine Angaben gemacht.

Der Erfindung liegt die Aufgabe zugrunde, einen vor direkter Sonneneinstrahlung bei gleichzeitig guter Luftdurchgängigkeit schützenden Verkleidungsdeckel bereitzustellen, der bei einfacher und das Flächenmaterial zugleich spannender Befestigung am Rahmen von leichter Konstruktion ist und dennoch eine hohe Biegesteifigkeit aufweist, um im Fahrbetrieb bei geöffnetem Schiebedach auftretenden Auftriebskräften widerstehen zu können.

Die gestellte Aufgabe wird ausgehend von den Gattungsmerkmalen des Oberbegriffs durch die im kennzeichnenden Teil des Patentanspruchs 1 angegebenen Merkmale gelöst. Vorteilhafte Weiterbildungen der Erfindung sind in den Unteransprüchen angegeben und werden nachstehend ebenfalls näher erläutert.

Der erfindungsgemäße Verkleidungsdeckel besteht im wesentlichen aus einem formstabilen, mit dem flexiblen, luftdurchlässigen Material bespannten Verkleidungsrahmen und zeichnet sich gleichermaßen durch geringes Gewicht, leichte Herstellbarkeit, gute Luft- und auch Lichtdurchlässigkeit bei Vermeidung direkter Sonneneinstrahlung aus. Selbst wenn bei vollständig unter oder über die hintere feste Dachfläche des Kraftfahrzeugs verlagertem Schiebedeckel der Verkleidungsdeckel in seine die Dachöffnung vollständig ausfüllende Lage verschoben ist, ermöglicht die luftdurchlässige Bespannung des Verkleidungsrahmens eine nahezu ungehinderte Luftströmung durch den Verkleidungsdeckel hindurch, wodurch die bei schneller Fahrt auftretenden Auftriebskräfte so gering bleiben, daß sie den Verkleidungsdeckel nicht durchbiegen können.

Erfindungsgemäß erfolgt die Befestigung und Spannung des flexiblen und luftdurchlässigen Flächenmaterials am Verkleidungsrahmen wie im kennzeichnenden Teil des Anspruchs 1 angegeben durch eine im Verkleidungsrahmen angebrachte Klemmnut, welcher in die Nut einpreßbare Klemmleisten zugeordnet sind. Zwischen den Wänden der Klemmnut und den entsprechenden Wandflächen der Klemmleisten wird das Flächenmaterial eingeklemmt. Zweckmäßig ist hierbei die Klemmnut entsprechend Anspruch 2 über alle Seiten des Verkleidungsrahmens umlaufend ausgebildet, wobei die Klemmleisten zu einem einteiligen Klemmrahmen zusammengefaßt sind.

Eine vorteilhafte Querschnittsprofilierung für die Klemmleisten ist im Anspruch 3 angegeben. Die Klemmleisten bzw. der Klemmrahmen können aus Aluminium oder einem geeigneten Kunststoff stranggepreßt sein.

Für eine zuverlässige Befestigung des Flächenmaterials in der Klemmnut ist es von Vorteil, wenn in der Klemmnut und/oder an der Klemmleiste entsprechend Anspruch 4 eine in Längsrichtung durchgehende Riffelung vorgesehen ist.

Der Verkleidungsrahmen kann ebenfalls aus einer Profillänge eines Strangpreßprofils aus Aluminium oder einem geeigneten Kunststoff hergestellt sein, indem die Profillänge an den Ecken des Rahmens gebogen und die entstehende Stoßstelle mit Steckverbindern zusammengefügt ist. Vorzugsweise ist jedoch der Verkleidungsrahmen entsprechend Anspruch 5 aus vier Strangpreßprofilabschnitten, von denen jeweils zwei zur Erzielung eines rechtwinkligen Verkleidungsrahmens von gleicher Länge sind, und vier Eckverbindungsstücken zusammengesetzt. Diese Ausführungsform bietet den Vorteil der leichten Anpassung des Verkleidungsdeckels an Dachöffnungen verschiedener Länge und Breite. Zur Anpassung an diese unterschiedlichen Dachöffnungen sind lediglich die vier Strangpreßprofilabschnitte entsprechend abzulängen, während die Eckverbindungsstücke für alle Dachöffnungsgrößen gleichbleibend sind. Ein solchermaßen aus acht Einzelteilen zusammengesetzter Verkleidungsrahmen kann natürlich an den einzelnen Verbindungsstellen seinen Zusammenhalt sichernde Befestigungselemente aufweisen. Bei Verwendung eines einteiligen Klemmrahmens werden die einzelnen Teile des Verkleidungsrahmens zusätzlich durch den in der umlaufenden Klemmnut verankerten Klemmrahmen zusammengehalten.

Zweckmäßig ist das den Verkleidungsrahmen bildende Strangpreßprofil ein Hohlkammerprofil, wie das im Anspruch 6 angegeben ist. Ein wesentlicher Vorteil dieser Ausbildung des Strangpreßprofils als Hohlkammerprofil ist das Erzielen einer großen Biegesteifigkeit, welche dem Verkleidungsrahmen eine hohe Steifigkeit gegen Durchbiegungen verleiht. Außerdem können die Hohlkammern in dem Strangpreßprofil bei dem Zusammensetzen des mehrteiligen Verkleidungsrahmens Steckverbindungsglieder aufnehmen, wie das ebenfalls im Anspruch 6 angegeben ist.

In Weiterführung des Erfindungsgedankens ist das die Bespannung des Verkleidungsrahmens bildende flexible, luftdurchlässige Flächenmaterial gemäß Anspruch 7 ein Textilgewebe oder eine perforierte Kunststoffolie. Beide Materialtypen sind nicht nur besonders leicht, sondern sind auch in hochfester Ausführung erhältlich, wobei sie in beiden Zugrichtungen der Ebene wegen der biaxialen Einspannung von gleicher Festigkeit sein sollten.

Zusätzlich kann die Oberseite des flexiblen, luftdurchlässigen Flächenmaterials gemäß Anspruch 8 wärmedämmend und die Sonnenstrahlung reflektierend beschichtet sein. Durch eine derartige Beschichtung wird die Flexibilität und die Luftdurchlässigkeit nicht wesentlich verringert. Beispielsweise kann auf die Oberseite einer feinporigen Kunststoffolie ein offenporiger Schaumstoffbelag aufkaschiert sein.

Das zum Bespannen des Verkleidungsrahmens verwendete Flächenmaterial erlaubt auch vorteilhaft und wie im Anspruch 9 angegeben eine Anpassung an die übrige Fahrzeuginnenausstattung.

Der erfindungsgemäße Verkleidungsdeckel kann durch entsprechende Biegeformung insbesondere der Querteile seines Verkleidungsrahmens an den Wölbungsverlauf des Fahrzeugdaches angepaßt werden, wobei die Auflage und Fixierung des zum Bespannen des Rahmens verwendeten Flächenmaterials auf der Rahmenoberseite nicht verlorengeht, weil das gespannte Flächenmaterial der Rahmenbiegung folgen kann.

Weitere Einzelheiten der Erfindung werden nachfolgend anhand der ein bevorzugtes Ausführungsbeispiel darstellenden Zeichnungen näher erläutert. Darin zeigt:
- Fig. 1: eine perspektivische Explosionsansicht des Verkleidungsdeckels,
- Fig. 2: eine abgebrochene Draufsicht auf den Verkleidungsdeckel mit strichpunktiert angedeutetem und ebenfalls abgebrochenem Dachrahmen, an welchem der Verkleidungsdeckel verschiebbar gelagert ist und
- Fig. 3: einen abgebrochenen Schnitt entlang der Linie III-III in Fig. 2.

Wie aus Fig. 3 ersichtlich ist, befindet sich in einem festen Fahrzeugdach 1 eine Dachöffnung 2, die bei geschlossenem Schiebedach von einem ihr verlagerbar zugeordneten Schiebedeckel 3 geschlossen ist. In der schematischen Darstellung der Fig. 3 handelt es sich um einen Glasschiebedeckel. Unterhalb des Fahrzeugdachs 1 befindet sich ein die Dachöffnung 2 umgebender Dachrahmen 4, der mit seitlichen Führungsschienen 5 ausgerüstet ist, an welchen der Schiebedeckel 3 über nicht dargestellte Führungs- und Ausstellelemente auf hier nicht interessierende, im übrigen aber bekannte Weise geführt ist.

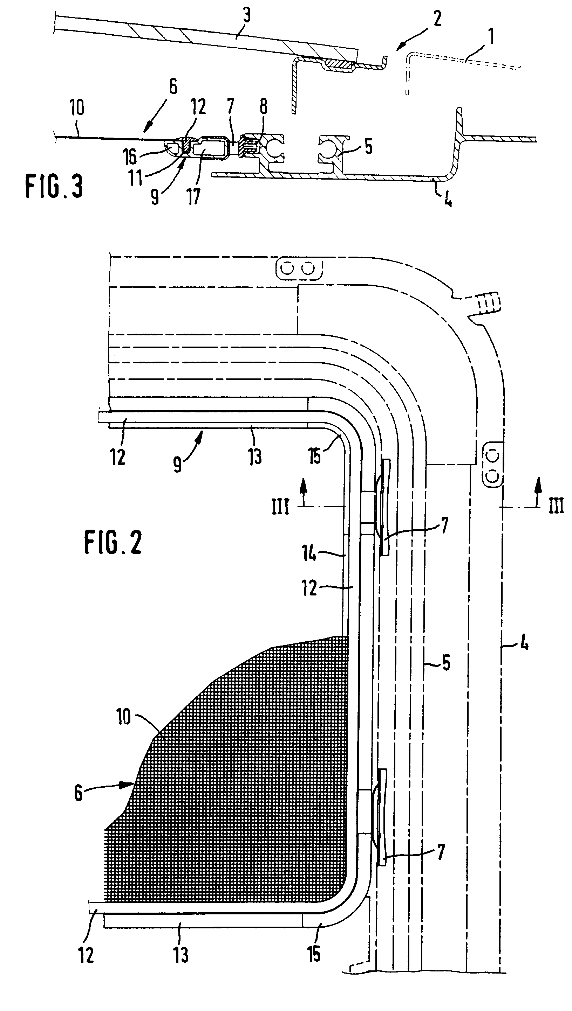

An den Führungsschienen 5 ist der insgesamt mit der Bezugszahl 6 bezeichnete Verkleidungsdeckel verschiebbar gelagert. Von dem Verkleidungsdeckel 6 und seiner Führungssituation an den Führungsschienen ist in den Fig. 2 und 3 lediglich die rechte Seite dargestellt, die linke Seite ist spiegelbildlich ausgeführt. Der Verkleidungsdeckel 6 greift mit daran angebrachten Führungsschuhen 7 in einen seitlich an der Führungsschiene 5 befindlichen Führungskanal 8 verschiebbar ein. Der Verkleidungsdeckel besitzt einen seine Außenform und seine Außenabmessungen im wesentlichen bestimmenden steifen Verkleidungsrahmen 9, der mit einem flexiblen, luftdurchlässigen Flächenmaterial 10 bespannt ist.

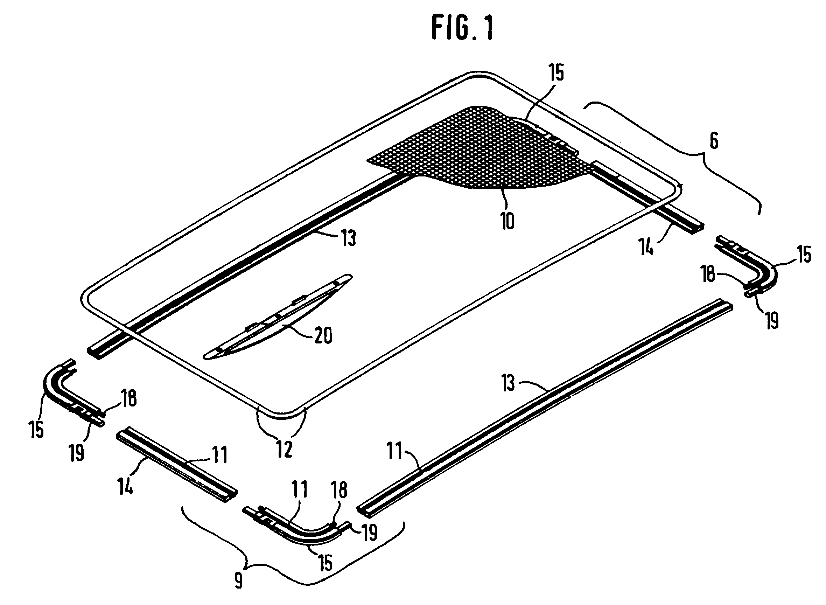

Wie aus den Fig. 1 und 3 ersichtlich ist, ist der Verkleidungsrahmen 9 an seiner oberen Fläche mit einer nach oben offenen Klemmnut 11 versehen. Die Klemmnut 11 ist durchgehend über alle Seiten des Verkleidungsrahmens 11 ausgebildet und ist auch um die Rahmenecken geführt. In die Klemmnut ist eine das Flächenmaterial 10 erfassende und am Verkleidungsrahmen 9 fixierende kederartige Klemmleiste 12 eingepreßt. Wie insbesondere Fig. 1 zu erkennen gibt, ist die Klemmleiste 12 an den Längsteilen, den Querteilen und den Ecken des Verkleidungsrahmens 9 vorgesehen, so daß die diesbezüglichen Abschnitte der Klemmleiste zu einem einteiligen Klemmrahmen zusammengefaßt sind, welcher der Klemmnut 11 komplementär zugeordnet ist. Die Klemmleiste 12 weist einen T-förmigen Profilquerschnitt auf, dessen Steg in die Klemmnut 11 unter Zwischenlage des Flächenmaterials 10 einpreßbar ist und dessen Schenkel nach dem Einpressen der oberen Fläche des Verkleidungsrahmens 9 aufliegt. Bei der Herstellung des Verkleidungsdeckels wird das Flächenmaterial 10 etwa auf die Außengröße des Verkleidungsrahmens 9 zugeschnitten und auf die obere Fläche des Verkleidungsrahmens aufgelegt. Die Ränder des Flächenmaterialzuschnitts überdecken dabei die umlaufende Klemmnut, so daß diese Ränder beim nachfolgenden Einpressen des Stegs der rahmenartigen Klemmleiste erfaßt und in die Klemmnut verdrängt werden. Dabei wird das Flächenmaterial 10 biaxial gespannt. Durch die in beiden Achsen gleichmäßige Spannung des Flächenmaterials überzieht dieses trommelfellartig straff den Verkleidungsrahmen 9.

Die Wandflächen der Klemmnut 11 und/oder die diesen zugeordneten Wandflächen der Klemmleisten, d.h. des Klemmleistenstegs sind mit einer in Längsrichtung durchgehenden Riffelung versehen, wodurch die Einpreßhaftung der Klemmleiste 12 in der Klemmnut 11 und damit die Verankerung der Einspannränder des Flächenmaterials 10 noch verbessert wird.

Wie insbesondere die Fig. 1 veranschaulicht, ist der Verkleidungsrahmen 9 aus vier Strangpreßprofilabschnitten 13 und 14 von paarweise gleicher Länge und vier übereinstimmenden 90°-Eckverbindungsstücken 15 zusammengesetzt. Fig. 3 zeigt, daß das den Verkleidungsrahmen 9 bildende Strangpreßprofil ein Hohlkammerprofil mit zwei Hohlkammern 16 und 17 ist, in dessen Hohlkammern bei dem Zusammensetzen des Verkleidungsrahmens 9 Steckverbindungsglieder 18 bzw. 19 kraftschlüssig eingreifen. Die Steckverbindungsglieder 18 und 19 können integrale Bestandteile der Eckverbindungsstücke 15 sein. Es ist ersichtlich, daß die acht Teile des Verkleidungsrahmens 9 zusätzlich durch die rahmenartige Klemmleiste 12 zusammengehalten werden, wenn diese in die Klemmnut 11 eingepreßt ist.

In den Zeichnungen ist das flexible, luftdurchlässige Flächenmaterial 10 als Gittergewebe dargestellt. Es kann sich dabei um ein aus Synthetikfäden erzeugtes Textilgewebe handeln. Aber auch eine perforierte Folie aus einem geeigneten Kunststoff ist für den vorliegenden Zweck brauchbar.

An dem Verkleidungsrahmen 9 kann, wie in Fig. 1 angedeutet ist, noch ein Handgriff 20 befestigt sein. Dieser ist zweckmäßig an der unteren Fläche des vorderen Rahmenquerteils befestigt, um den Verkleidungsdeckel bequem in seinen Führungskanälen 8 verschieben zu können.

Die in Fig. 3 mit den Bezugszahlen 1, 2 und 3. bezeichneten Teile der Dachkonstruktion sind aus Gründen der Vereinfachung und Übersichtlichkeit in Fig. 2 nicht dargestellt.

## Patentansprüche

1. Verkleidungsdeckel für Kraftfahrzeug-Schiebedächer, der unterhalb des einer Dachöffnung (2) verlagerbar zugeordneten Schiebedeckels (3) an seitlichen Führungsschienen (5) verschiebbar gelagert ist, teilweise aus luftdurchlässigem Material besteht und einen seine Außenform und -abmessungen bestimmenden steifen Verkleidungsrahmen (9) besitzt, der mit einem flexiblen, luftdurchlässigen Flächenmaterial (10) bespannt ist, dadurch gekennzeichnet, daß der Verkleidungsrahmen (9) an seiner oberen Fläche mit einer nach oben offenen Klemmnut (11) versehen ist, in welche das Flächenmaterial (10) erfassende und am Verkleidungsrahmen (9) fixierende Klemmleisten (12) das Flächenmaterial (10) biaxial spannend eingepreßt sind.

2. Verkleidungsdeckel nach Anspruch 1, dadurch gekennzeichnet, daß die Klemmnut (11) durchgehend über alle Seiten des Verkleidungsrahmens (9) umlaufend ausgebildet ist, und daß die Klemmleisten (12) zu einem einteiligen Klemmrahmen zusammengefaßt sind, welcher der Klemmnut (11) komplementär zugeordnet ist.

3. Verkleidungsdeckel nach Anspruch 2, dadurch gekennzeichnet, daß die Klemmleisten (12) einen T-förmigen Profilquerschnitt aufweisen, dessen Steg in die Klemmnut (11) unter Zwischenlage des Flächenmaterials (10) einpreßbar ist und dessen Schenkel nach dem Einpressen der oberen Fläche des Verkleidungsrahmens (9) aufliegen.

4. Verkleidungsdeckel nach Anspruch 2 oder 3, dadurch gekennzeichnet, daß die Wandflächen der Klemmnut (11) und/oder die diesen zugeordneten Wandflächen der Klemmleisten (12) mit einer in Längsrichtung durchgehenden Riffelung versehen ist.

5. Verkleidungsdeckel nach mindestens einem der Ansprüche 1 bis 4, dadurch gekennzeichnet, daß der Verkleidungsrahmen (9) aus vier Strangpreßprofilabschnitten (13, 14) von paarweise gleicher Länge und vier 90°-Eckverbindungsstücken (15) zusammengesetzt ist.

6. Verkleidungsdeckel nach Anspruch 5, dadurch gekennzeichnet, daß das den Verkleidungsrahmen (9) bildende Strangpreßprofil ein Hohlkammerprofil ist, in dessen Hohlkammern (16, 17) bei dem Zusammensetzen des Verkleidungsrahmens (9) Steckverbindungsglieder (18, 19) eingreifen.

7. Verkleidungsdeckel nach mindestens einem der Ansprüche 1 bis 6, dadurch gekennzeichnet, daß das flexible, luftdurchlässige Flächenmaterial (10) ein Textilgewebe oder eine perforierte Kunststoffolie ist.

8. Verkleidungsdeckel nach mindestens einem der Ansprüche 1 bis 7, dadurch gekennzeichnet, daß die Oberseite des flexiblen, luftdurchlässigen Flächenmaterials (10) wärmedämmend und die Sonnenstrahlung reflektierend beschichtet ist.

9. Verkleidungsdeckel nach mindestens einem der Ansprüche 1 bis 8, dadurch gekennzeichnet, daß die Unterseite des flexiblen, luftdurchlässigen Flächenmaterials (10) in Struktur und/oder Farbgebung der Fahrzeuginnenausstattung angepaßt ist.

## Claims

1. Lining lid for automobile sliding roofs, which is slidably mounted on lateral guide rails (5) beneath the sliding lid (3) displaceably associated with a roof opening (2), consists partly of air-permeable material and possesses a stiff lining frame (9), determining its external form and dimensions, which frame is covered with a flexible, air-permeable areal material (10), characterized in that the lining frame (9) is provided, on its upper face, with an upwardly open clamping groove (11), into which clamping strips (12) which grip the areal material (10) and fix it to the lining frame (9) are pressed, thus biaxially tensioning the areal material (10).

2. Lining lid according to claim 1, characterized in that the clamping groove (11) is constructed continuously around all sides of the lining frame (9), and that the clamping strips (12) are combined to a single-piece clamping frame, which is complementarily associated with the clamping groove (11).

3. Lining lid according to claim 2, characterized in that the clamping strips (12) have a T-shaped profile cross-section, the web of which can be pressed into the clamping groove (11) with the areal material (10) between, and the flanges of which, after the pressing-in, bear upon the upper face of the lining frame (9).

4. Lining lid according to claim 2 or 3, characterized in that the wall faces of the clamping groove (11) and/or the wall faces of the clamping strips (12) associated with them are provided with continuous grooving or fluting in the longitudinal direction.

5. Lining lid according to at least one of claims 1 to 4, characterized in that the lining frame (9) is made up of four extruded profile portions (13, 14) of equal lengths in pairs and of four 90°-corner connecting pieces (15).

6. Lining lid according to claim 5, characterized in that the extruded profile forming the lining frame (9) is a hollow chamber profile, into the hollow chambers (16, 17) of which plug connectors (18, 19) engage when the lining frame (9) is assembled together.

7. Lining lid according to at least one of claims 1 to 6, characterized in that the flexible, air-permeable areal material (10) is a textile fabric or a perforated plastic sheet.

8. Lining lid according to at least one of claims 1 to 7, characterized in that the upper face of the flexible, air-permeable areal material (10) is coated to make it thermally insulating and reflective of the sun's rays.

9. Lining lid according to at least one of claims 1 to 8, characterized in that the lower face of the flexible, air-permeable material (10) is adapted in its structure and/or colouring to the internal equipment of the automobile.

## Revendications

1. Trappe d'habillage pour toit ouvrant coulissant de véhicules automobiles, qui est monté mobile en translation le long de rails de guidage latéraux (5) au-dessous de la trappe coulissante (3) associée à une ouverture (2) du pavillon de façon mobile en translation, qui est partiellement composée d'une matière perméable à l'air et possède un cadre d'habillage (9) rigide, qui détermine sa forme extérieure et ses dimensions, et qui est tendu d'une matière plate flexible, perméable à l'air (10), caractérisée en ce que le cadre d'habillage (9) est muni, au niveau de sa surface supérieure, d'une rainure de coincement (11) ouverte vers le haut, dans laquelle des barrettes de coincement (12) qui saisissent la matière plate (10) et la fixent au cadre d'habillage (9) en tendant la matière plate (10) selon les deux axes.

2. Trappe d'habillage selon la revendication 1, caractérisée en ce que la rainure de coincement (11) est d'une configuration continue, s'étendant sur tous les côtés du cadre d'habillage (9) et en ce que les barrettes de coincement (12) sont réunies pour former un cadre de coincement en une seule pièce, qui est associé à la rainure de coincement (11) de façon complémentaire.

3. Trappe d'habillage selon la revendication 2, caractérisée en ce que les barrettes de coincement (12) présentent une section transversale de profil en forme de T dont la tige peut être enfoncée à force dans la rainure de coincement (11) avec interposition de la matière plate (10) et dont les branches sont appliquées sur la surface supérieure du cadre d'habillage (9) après l'enfoncement à force.

4. Trappe d'habillage selon la revendication 2 ou 3, caractérisée en ce que les surfaces de paroi de la rainure de coincement (11) et/ou les surfaces de paroi des barrettes de coincement (12) qui leur sont associées sont munies d'un moletage continu dans la direction longitudinale.

5. Trappe d'habillage selon au moins une des revendications 1 à 4, caractérisée en ce que le cadre d'habillage (9) est composé de quatre segments de profilé filé à la presse (13, 14), de longueur égale deux à deux, et de quatre pièces de liaison d'angle à 90° (15).

6. Trappe d'habillage selon la revendication 5, caractérisée en ce que le profilé filé à la presse qui forme le cadre d'habillage (9) est un profilé creux dans les chambres creuses (16, 17) duquel des organes de liaison à emmanchement (18, 19) s'engagent lors de l'assemblage du cadre d'habillage (9).

7. Trappe d'habillage selon au moins une des revendications 1 à 6, caractérisée en ce que la matière plate flexible, perméable à l'air (10) est un tissu textile ou une feuille de matière plastique perforée.

8. Trappe d'habillage selon au moins une des revendications 1 à 7, caractérisée en ce que la face supérieure de la matière plate flexible, perméable à l'air (10) est revêtue d'une matière qui atténue la chaleur et réfléchit le rayonnement solaire.

9. Trappe d'habillage selon au moins une des revendications 1 à 8, caractérisée en ce que la face inférieure de la matière plate flexible, perméable à l'air (10) est adaptée à la garniture intérieure du véhicule par sa structure et/ou sa coloration.
